# EUROPÄISCHE PATENTSCHRIFT

(11) **EP 0 987 777 B1**
(45) Veröffentlichungstag und Bekanntmachung des Hinweises auf die Patenterteilung: **29.10.2003**
(21) Anmeldenummer: 99115948.4
(22) Anmeldetag: 13.08.1999
(51) Int. Cl.: H01M 4/88, H01M 8/10

(54) **Katalysatorschicht für Polymer-Elektrolyt-Brennstoffzellen**
Catalytic layer for polymer electrolyte fuel cells
Couche catalytique pour des électrodes polymériques des piles à combustible

(30) Priorität: 20.08.1998 DE 19837669
(43) Veröffentlichungstag der Anmeldung: 22.03.2000
(73) Patentinhaber: OMG AG & Co. KG, 63457 Hanau (DE)
(72) Erfinder: Zuber, Ralf, Dr., 63762 Grossostheim (DE); Karch, Ralf, Dr., 63801 Kleinostheim (DE); Fehl, Knut, 36381 Schlüchtern-Ramholz (DE); Starz, Karl-Anton, Dr., 63517 Rodenbach (DE)
(74) Vertreter: Stellbrink, Axel

(56) Entgegenhaltungen:
- EP-A- 0 718 903
- DE-A- 4 417 403

## Beschreibung

Die Erfindung betrifft eine Katalysatorschicht für Brennstoffzellen, insbesondere PEM-Brennstoffzellen, bei denen ein festes Polymer als Elektrolyt eingesetzt wird.

Brennstoffzellen wandeln einen Brennstoff mit einem Oxidationsmittel örtlich voneinander getrennt an zwei Elektroden in Strom, Wärme und Wasser um. Als Brennstoff kann Wasserstoff oder ein wasserstoffreiches Gas, als Oxidationsmittel Sauerstoff oder Luft dienen. Der Vorgang der Energieumwandlung in der Brennstoffzelle zeichnet sich durch einen besonders hohen Wirkungsgrad aus. Aus diesem Grunde gewinnen Brennstoffzellen in Kombination mit Elektromotoren zunehmend Bedeutung als Alternative für herkömmliche Verbrennungskraftmaschinen.

Die sogenannte Polymer-Elektrolyt-Brennstoffzelle (PEM-Brennstoffzelle) eignet sich aufgrund ihrer kompakten Bauweise, ihrer Leistungsdichte sowie ihres hohen Wirkungsgrades für den Einsatz als Energiewandler in Kraftfahrzeugen.

Die PEM-Brennstoffzelle besteht aus einer stapelweisen Anordnung von Membran-Elektroden-Einheiten (MEE), zwischen denen bipolare Platten zur Gaszufuhr und Stromleitung angeordnet sind. Eine Membran-Elektroden-Einheit besteht aus einer Polymer-Elektrolyt-Membran, die auf beiden Seiten mit Katalysatorschichten versehen ist. Eine der Katalysatorschichten dient als Anode für die Oxidation von Wasserstoff und die zweite Katalysatorschicht als Kathode für die Reduktion von Sauerstoff. Auf die Katalysatorschichten werden sogenannte Gasverteilerstrukturen aus Kohlefaserpapier oder Kohlevlies aufgebracht, die durch ihre hohe Porosität von bis zu 75% einen guten Zugang der Reaktionsgase zu den Katalysatorschichten und eine gute Ableitung des Zellenstroms ermöglichen.

Die beiden Katalysatorschichten einer Membran-Elektroden-Einheit, das heißt Anode und Kathode, enthalten sogenannte Elektrokatalysatoren, die die jeweilige Reaktion (Oxidation von Wasserstoff beziehungsweise Reduktion von Sauerstoff) katalytisch unterstützen. Als katalytisch aktive Komponenten werden bevorzugt die Metalle der Platingruppe des Periodensystems der Elemente eingesetzt. In der Mehrzahl werden sogenannte Trägerkatalysatoren verwendet, bei denen die katalytisch aktiven Platingruppenmetalle in hochdisperser Form auf die Oberfläche eines leitfähigen Trägermaterials aufgebracht sind. Die mittlere Kristallitgröße der Edelmetallpartikel liegt dabei etwa zwischen 1 und 10 nm. Als Trägermaterialien haben sich feinteilige Ruße bewährt. Abhängig vom Einsatzgebiet können Anoden- und Kathodenschichten gleichartig aufgebaut sein oder unterschiedliche Elektrokatalysatoren enthalten.

Die Polymer-Elektrolyt-Membran einer PEM-Brennstoffzelle besteht aus Protonen leitenden Polymermaterialien. Diese Materialien werden im folgenden auch kurz als Ionomer bezeichnet. Bevorzugt wird ein Tetrafluorethylen-Fluorvinylether-Copolymer mit Säurefunktionen, insbesondere Sulfonsäuregruppen, verwendet. Ein solches Material wird zum Beispiel unter dem Handelsnamen Nafion® von E.I. du Pont vertrieben. Es sind jedoch auch andere, insbesondere fluorfreie Ionomermaterialien, wie sulfonierte Polyetherketone oder Arylketone oder Polybenzimidazole einsetzbar.

Für den breiten kommerziellen Einsatz von PEM-Brennstoffzellen in Kraftfahrzeugen ist eine weitere Verbesserung der elektrochemischen Zellenleistung sowie eine deutliche Verminderung der Systemkosten notwendig, die zum großen Teil durch die benötigten Platingruppenmetalle verursacht werden. Zur Verringerung der Kosten pro Kilowatt installierter Leistung muß daher die Beladung der Elektroden einer Brennstoffzelle mit den Platingruppenmetallen vermindert werden. Hierfür ist es erforderlich, die Elektrokatalysatoren, beziehungsweise die Katalysatorschichten, weiter zu verbessern und die katalytisch aktiven Edelmetallpartikel effektiver auszunutzen.

Wesentlich für die Effektivität einer Katalysatorschicht ist die Ausbildung der sogenannten Dreiphasenzonen, in denen die trägerfixierten, katalytisch aktiven Edelmetallpartikel, der Polymerelektrolyt und das Reaktionsgas in direktem Kontakt stehen.

Die US 4,876,115 beschreibt ein Verfahren zur Behandlung einer porösen Gasdiffusionselektrode, welche eine Katalysatorbeladung mit auf Kohlenstoffpartikeln aufgebrachtem Platin von weniger als 0,5 mg Pt/cm² aufweist. Die Elektrode wird mit einer Lösung eines Ionomers imprägniert. Hierdurch werden die Oberflächen der Kohlenstoffpartikel mit dem Ionomer beschichtet.

In der US 5,234,777 wird eine Membran-Elektroden-Einheit aus einer Polymer-Elektrolyt-Membran und beidseitigen Katalysatorschichten und porösen Gasverteilerstrukturen vorgeschlagen. Die Katalysatorschichten bestehen aus einem Platinkatalysator (Platin auf einem Kohlenstoffträger) und einem Protonen leitenden Ionomer. Die Dicke der Katalysatorschichten beträgt weniger als 10 µm. Der Platinkatalysator ist gleichmäßig in dem Protonen leitenden Ionomer dispergiert. Die Platinbeladung der Katalysatorschichten beträgt weniger als 0,35 mg/cm².

Zur Herstellung der Membran-Elektroden-Einheit gemäß dieser Patentschrift werden zwei Verfahren beschrieben (Protokoll I und Protokoll II). Gemäß Protokoll I wird der Platinkatalysator in einer alkoholischen Lösung des Ionomers dispergiert. Diese Dispersion, im allgemeinen auch als Tinte bezeichnet, wird auf eine Trägerfolie aus PTFE (Polytetrafluorethylen) aufgebracht, getrocknet und durch Heißpressen auf die gegenüberliegenden Seiten der Polymer-Elektrolyt-Membran auflaminiert.

Gemäß Protokoll II wird die Polymer-Elektrolyt-Membran direkt mit einer Tinte aus Platinkatalysator und Ionomerlösung beschichtet. Die aufgebrachte Schicht wird bei mindestens 150°C getrocknet.

Die Elektrodenschichten nach US 5,234,777 zeichnen sich durch eine homogene Verteilung des Katalysators im Ionomer aus. Ein gezielter Aufbau von Dreiphasenzonen und damit eine bessere Ausnutzung des eingesetzten Katalysators ist durch dieses Verfahren nicht möglich.

Die US 5,084,144 beschreibt die Herstellung einer Gasdiffusionselektrode mit erhöhter Zahl von Dreiphasenzonen und damit verbesserter elektrokatalytischer Aktivität. Zur Herstellung der Gasdiffusionselektrode wird von einer Anordnung ausgegangen, die aus einer Schicht eines elektrisch leitfähigen Trägermaterials auf einer hydrophoben Gasverteilerstruktur besteht. Die Schicht wird mit einer Lösung eines Ionomers imprägniert und danach in ein galvanisches Bad mit Edelmetallionen eingebracht, die dann durch kurze Strompulse in Form von Kristalliten mit Durchmessern von weniger als 10 Nanometern abgeschieden werden. Gemäß dieser Patentschrift werden also die katalytisch aktiven Edelmetallpartikel nachträglich durch ein elektrochemisches Verfahren in die Katalysatorschicht eingebracht.

Der Nachteil dieses Verfahrens ist, daß zwar der Kontakt des Platinkatalysators mit dem Ionomer gewährleistet ist, aber der Zugang der Reaktivgase nicht ausreichend berücksichtigt wird. Dies führt vor allem bei hohen Stromdichten zu Problemen beim Gastransport.

Der Kontakt des Elektrokatalysators mit dem Porensystem der Katalysatorschicht für Reaktivgase soll mit einem Verfahren gemäß DE 19502622 A1 gezielt verbessert werden können. Nach diesem Verfahren wird eine anorganische Verbindung eines Edelmetalls im Porensystem einer unkatalysierten Gasdiffusionselektrode auskristallisiert und anschließend unter einem Elektrolyten bei Zuführung eines Gases reduziert. Die unkatalysierte Gasdiffusionselektrode besteht zum Beispiel aus einer mit PTFE gebundenen Schicht aus Aktivkohle. Auch gemäß diesem Verfahren werden die katalytisch aktiven Edelmetallpartikel in einem separaten Verfahrensschritt in die Katalysatorschicht eingebracht. Das Verfahren erfordert eine abschließende Reduktion der Edelmetallverbindungen.

Das Verfahren nach DE 19502622 A1 ist für Gasdiffusionselektroden von Brennstoffzellen mit flüssigen Elektrolyten entwickelt worden. Für Polymer-Elektrolyt-Brennstoffzellen ist das Verfahren nicht geeignet, da hier ein fester und damit unbeweglicher, polymerer Elektrolyt vorliegt, der nicht entsprechend dem genannten Verfahren zur gezielten Ausbildung der Dreiphasenzonen genutzt werden kann.

Ein weiteres Verfahren zur Herstellung einer Gasdiffusionselektrode wird in der DE 4417403 A1 beschrieben. Gemäß dieser Schrift wird zunächst ein flächiges Grundmaterial für eine Gasdiffusionselektrode aus einer Mischung eines Karbonpulvers und eines Fluor-Harz-Pulvers gebildet und bei 350°C calciniert. Eine Seite des flächigen Grundmaterials wird mit einer Lösung eines Platingruppenmetallsalzes in einem komplexierenden organischen Lösungsmittel beschichtet und getrocknet. Anschließend wird dieses Gebilde erneut bei 250-380°C in einer Schutzgasatmosphäre calciniert.

Das Verfahren gemäß der DE 4417403 A1 weist ebenfalls einen separaten Verfahrensschritt zur Einbringung der Edelmetallpartikel in die Katalysatorschicht auf. Durch die notwendige zweimalige Calcination ist es sehr langwierig und kostenaufwendig. Eine wirkliche Erhöhung des Anteils an Dreiphasenzonen wird nicht erreicht, da das Verfahren nicht in Anwesenheit von Ionomer durchgeführt werden kann, da dies bei der Calcination thermisch geschädigt würde. Erst nach der letzten Calcination wird die Elektrode auf eine mit einer Nafionflüssigkeit beschichteten Polymermembran aufgelegt und mit dieser bei 130°C heiß verpresst.

Ein genereller Nachteil der bekannten Membran-Elektroden-Einheiten und der Verfahren zu deren Herstellung oder zur Herstellung von Gasdiffusionselektroden ist, daß der Elektrokatalysator (im allgemeinen ein Edelmetall auf einem Kohlenstoffträger) entweder in einem vorgeschalteten Herstellverfahren aus einer Edelmetallverbindung und einem Trägermaterial angefertigt werden oder nachträglich in die Katalysatorbeschichtung eingebracht werden muß. Diese zusätzlichen Schritte erhöhen die Kosten für ein PEM-Brennstoffzellensystem.

Es war daher die Aufgabe der vorliegenden Erfindung, eine Katalysatorschicht für Polymer-Elektrolyt-Brennstoffzellen bereitzustellen, welche eine bessere elektrokatalytische Aktivität als bekannte Katalysatorschichten aufweist und in einem einfachen und kostengünstigen Verfahren unter Verwendung einer neuartigen Tinte hergestellt werden kann. Weitere Gegenstände der Erfindung sind die Bereitstellung der Tinte für die Herstellung der Katalysatorschicht sowie das Herstellverfahren selber und die damit hergestellten Gasdiffusionselektroden und Membran-Elektroden-Einheiten.

Diese Aufgabe wird durch eine Katalysatorschicht auf einem Substratmaterial gelöst, welche ein Protonen leitendes Polymer (Ionomer), elektrisch leitfähige Kohlenstoffpartikel und feinteilige Partikel mindestens eines Edelmetalles enthält. Die Katalysatorschicht ist erhältlich durch Beschichten des Substratmaterials mit einer Tinte, welche eine Dispersion aus den Kohlenstoffpartikeln und mindestens einer organischen Edelmetall-Komplexverbindung in einer Lösung des Ionomers enthält und Trocknen der Beschichtung unterhalb einer Temperatur, bei der das Ionomer oder das Substratmaterial thermisch geschädigt werden, wobei die Edelmetalle der Komplexverbindungen in der Oxidationsstufe 0 vorliegen und die Komplexverbindungen während der Trocknung unter Bildung der fein verteilten Edelmetallpartikel thermisch zersetzt werden.

Die Erfindung wird an Hand der Figuren 1 bis 5 näher erläutert. Es zeigen:
- Figur 1:: Aufbau einer Membran-Elektroden-Einheit
- Figur 2:: Aufbau einer Gasdiffusionselektrode
- Figur 3:: Polymermembran mit beidseitigen Katalysatorschichten (Membran-Katalysator-Einheit)
- Figur 4:: Zellspannung in Abhängigkeit von der Stromdichte bei Luftbetrieb für die MEE von Beispiel 1 und Vergleichsbeispiel 1
- Figur 5:: Zellspannung in Abhängigkeit von der Stromdichte bei Luftbetrieb für die MEE von Beispiel 2 und Vergleichsbeispiel 1

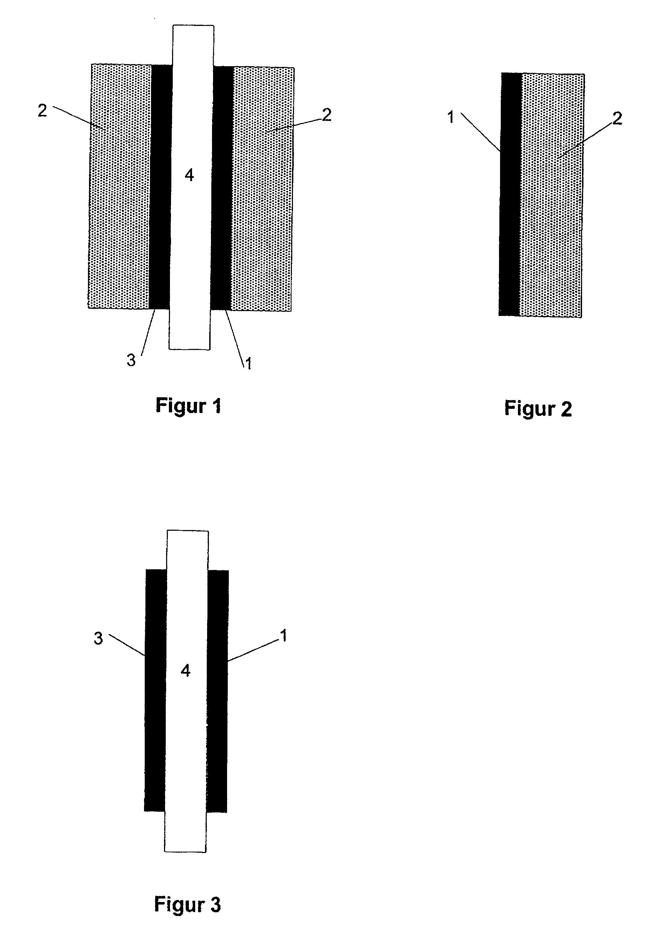

Die Figuren 1,2 und 3 dienen zur Klarstellung der in dieser Erfindung verwendeten Begriffe. Figur 1 zeigt den Aufbau einer Membran-Elektroden-Einheit aus der Polymermembran 4 mit beidseitig aufgebrachten Gasdiffusionselektroden, welche jeweils aus der Katalysatorschicht 1 oder 3 und einer Gasverteilerschicht 2 bestehen.

Der Aufbau einer Gasdiffusionselektrode ist in Figur 2 gezeigt. Eine Gasdiffusionselektrode besteht aus einer porösen Gasverteilerschicht 2, auch als Gasverteilerstruktur bezeichnet, und einer einseitig aufgebrachten Katalysatorschicht 1.

Figur 3 zeigt eine Polymermembran 4 mit beidseitig aufgebrachten Katalysatorschichten 1 und 3. Eine solche Anordnung wird im folgenden als Membran-Katalysator-Einheit bezeichnet.

Die erfindungsgemäße Katalysatorschicht besteht im wesentlichen aus dem Ionomer, den leitfähigen Kohlenstoffpartikeln, den Edelmetallpartikeln und dem Porensystem der Schicht, welches sich bei der Herstellung der Schicht einstellt.

Die elektrokatalytische Aktivität dieser Schicht weist einen Leistungssprung gegenüber den bekannten Katalysatorschichten auf. Verglichen mit herkömmlichen Katalysatorschichten, zu deren Herstellung fertige Trägerkatalysatoren (Edelmetallpartikel auf zum Beispiel Ruß) verwendet werden, zeigen die erfindungsgemäßen Katalysatorschichten eine gleichwertige katalytische Aktivität bei nur etwa 50% der Edelmetallbeladung. Bei gleicher Edelmetallbeladung liefern die erfindungsgemäßen Schichten entsprechend erhöhte elektrische Leistungen.

Die beobachtete Leistungssteigerung kann nicht durch eine optimierte Struktur bekannter Katalysatorschichten erklärt werden, sondern belegt, daß die erfindungsgemäßen Katalysatorschichten eine neuartige Struktur aufweisen, die auf das verwendete Herstellverfahren zurückgeht. Das im folgenden zu beschreibende Herstellverfahren bewirkt offenbar eine sehr vorteilhafte Anordnung von Ionomer, Kohlenstoffpartikeln, Edelmetallpartikeln und Poren der Katalysatorschicht zueinander und ermöglicht damit eine bessere Ausnutzung der katalytischen Aktivität der Edelmetallpartikel.

Wesentlich für die Herstellung der erfindungsgemäßen Gasdiffusionselektrode ist die Verwendung einer neuartigen Tinte. Sie enthält eine Dispersion der leitfähigen Kohlenstoffpartikel und mindestens einer organischen Edelmetall-Komplexverbindung in einer Lösung des Ionomers, wobei die Edelmetalle der Komplexverbindungen in der Oxidationsstufe 0 vorliegen und die Komplexverbindungen unterhalb einer Temperatur, bei der eine thermisch bedingte Schädigung des Ionomers oder des Substratmaterials einsetzt, thermisch unter Bildung feinteiliger Edelmetallpartikel zersetzt werden können.

Die Tinte enthält gegenüber den bekannten Herstellverfahren keinen vorgefertigten Trägerkatalysator, weist jedoch alle für die Schicht notwendigen Vorstufen auf (Lösung des Ionomers, Edelmetall-Komplexverbindungen und leitfähige Kohlenstoffpartikel), so daß die Katalysatorschicht in einem Arbeitsgang hergestellt werden kann. Ein nachträgliches Einbringen der katalytisch aktiven Edelmetalle ist nicht erforderlich.

Als katalytisch aktive Komponenten dienen die Platingruppenmetalle Platin, Palladium, Iridium, Rhodium und Ruthenium oder Legierungen davon. Die katalytisch aktiven Metalle oder Metallegierungen können weitere Legierungszusätze wie Cobalt, Chrom, Wolfram, Molybdän, Vanadium, Eisen, Kupfer, Nickel etc. enthalten.

Die zu verwendenden Platingruppenmetalle hängen von dem geplanten Einsatzfeld der fertigen PEM-Brennstoffzelle ab. Wird die Brennstoffzelle mit reinem Wasserstoff als Brennstoff betrieben, so ist es ausreichend, wenn nur Platin als katalytisch aktives Edelmetall eingesetzt wird. Die für die Herstellung der Katalysatorschicht benötigte Tinte enthält in diesem Fall nur eine organische Komplexverbindung des Platins. Diese Katalysatorschicht kann sowohl für die Anode als auch für die Kathode eingesetzt werden.

Wird dagegen ein Kohlenmonoxid enthaltendes Reformatgas als Brennstoff verwendet, so sollte der Anodenkatalysator eine möglichst hohe Resistenz gegenüber einer Vergiftung durch Kohlenmonoxid besitzen. Hierfür sind bimetallische Elektrokatalysatoren auf der Basis von Platin/Ruthenium geeignet. Für die Herstellung der Anodenschicht muß die Tinte daher beide Metalle in Form von organischen Komplexverbindungen enthalten. Für die Kathodenschicht ist es in diesem Fall ausreichend, wenn sie als katalytisch aktives Edelmetall weiterhin nur Platin enthält.

Darüber hinaus sind bimetallische Legierungskatalysatoren von Platin mit Übergangsmetallen wie zum Beispiel Cobalt und Chrom bekannt geworden. Ebenso gibt es ternäre Legierungskatalysatoren für Anwendungen in Brennstoffzellen. Ein Beispiel hierfür ist ein Platin/Cobalt/Chrom-Katalysator. Zur Herstellung solcher Katalysatoren müssen die benötigten Metalle der Tinte in Form von organischen Komplexverbindungen zugefügt werden.

Die katalytisch aktiven Komponenten werden der Tinte in Form von organischen Edelmetall-Komplexverbindungen zugesetzt, in denen die Edelmetalle in der Oxidationsstufe 0 vorliegen. Diese Edelmetallverbindungen müssen die genannten Bedingungen bezüglich ihrer thermischen Zersetzbarkeit erfüllen. Bevorzugte Materialien aus dieser Klasse von Verbindungen sind Komplexverbindungen zwischen Platin in der Oxidationsstufe 0 und vinylsubstituierten Siloxanen. Diese Verbindungen können gemäß dem Patent US 3,775,452 hergestellt werden. Sie werden nach ihrem Erfinder auch als Karstedt-Katalysatoren bezeichnet.

Besonders bevorzugt ist das Umsetzungsprodukt von 1,3-Divinyl-1,1,3,3-tetramethyldisiloxan mit Hexachloroplatinsäure. Das flüssige Umsetzungsprodukt enthält etwa 18 Gew.-% Platin und wird im folgenden als Pt-VTS bezeichnet. Pt-VTS kann zum Beispiel durch Trocknen bei einer Temperatur von 110°C zersetzt werden. Dabei bleibt feinst verteiltes, metallisches Platin zurück. Der Siliciumgehalt der vinylsubstituierten Siloxane kann in den fertigen Katalysatorschichten nicht mehr nachgewiesen werden.

Geeignete Komplexverbindungen der Edelmetalle Iridium, Ruthenium und Palladium sind Dodecacarbonyltetrairidium (Ir₄(CO)₁₂), (η⁶-Benzol)(η⁴-Cyclohexadien)-Ruthenium(0) ((η⁶-C₆H₆)Ru(η⁴-1,3-C₆H₈)) und Bis-(dibenzylidenaceton)-Palladium(0).

Die organische Edelmetall-Komplexverbindung kann je nach Aggregatzustand und gewünschter Konzentration als reine Flüssigkeit oder als Lösung in einem meist unpolaren Lösungsmittel eingesetzt werden. Beispiele hierfür sind aliphatische Kohlenwasserstoffe oder Ester.

Bei Anwendung von Siebdrucktechniken zur Herstellung der Elektrodenbeschichtung sollte die Verdunstungszahlen (VZ) dieser Lösungsmittel größer 600, bevorzugt größer 800 sein. Die Verdunstungszahl wird nach DIN 53170 bestimmt. Sie ist ein relativer Wert. Als Bezugsgröße dient Diethyläther.

Als Ionomer für die Tinte werden typischerweise die schon oben beschriebenen Materialien der Protonen leitenden Membranen, jedoch in gelöster Form eingesetzt. Bevorzugte Ionomere sind Tetrafluorethylen-Fluorvinylether-Copolymer mit Säurefunktionen, insbesondere mit Sulfonsäuregruppen. Geeignet sind auch fluorfreie Ionomermaterialien, wie sulfonierte Polyetherketone oder Arylketone oder Polybenzimidazole.

Als Lösungsmittel für das Ionomer kommen zum Beispiel einund mehrwertige Alkohole, Glykole sowie Glykoletheralkohole und Glykolether in Frage. Ihre Verdunstungszahl sollte ebenfalls größer 600, bevorzugt größer 800 sein. Beispiele für geeignete Lösungsmittel sind Propylenglykol, Dipropylenglykol, Glyzerin, Hexylenglykol und andere.

Als Material für die leitfähigen Kohlenstoffpartikel können alle auf dem Gebiet der Brennstoffzellen bekannten Kohlenstoffmaterialien mit hoher elektrischer Leitfähigkeit und hoher Oberfläche eingesetzt werden. Bevorzugt werden Ruße, Graphit oder Aktivkohlen verwendet.

Das Gewichtsverhältnis der leitfähigen Kohlenstoffpartikel zum Ionomer in der Tinte liegt typischerweise zwischen 5:1 und 1:1, bevorzugt zwischen 4:1 und 2:1. Die gewünschte Edelmetallbeladung (Flächenkonzentration in mg/cm²) der fertigen Katalysatorschicht kann bei vorgegebener Dicke der Schicht durch ein entsprechendes Gewichtsverhältnis der Edelmetalle zu den Kohlenstoffpartikeln in der Tinte eingestellt werden. Bevorzugt werden Gewichtsverhältnisse der Edelmetalle zu den Kohlenstoffpartikeln zwischen 1:10 bis 4:1 eingesetzt.

Zur Herstellung einer homogen dispergierten Tinte können bekannte Hilfsmittel zum Einsatz kommen, wie zum Beispiel Hochgeschwindigkeitsrührer, Ultraschallbäder oder Dreiwalzwerke.

Die homogenisierte Tinte kann mittels verschiedener Techniken auf das Substratmaterial aufgebracht werden. Hierzu gehören zum Beispiel das Sprühen, Pinseln, Streichen oder Drucken.

Nach Beschichten des Substratmaterials mit der Tinte, beziehungsweise Dispersion, wird die erhaltene Beschichtung bei erhöhter Temperatur getrocknet. Ionomer, Edelmetall-Komplexverbindungen und die Trocknungstemperatur müssen dabei in geeigneter Weise aufeinander abgestimmt werden. Die Edelmetall-Komplexverbindungen sollten sich bei einer Trocknungstemperatur zersetzen lassen, die noch unterhalb einer Temperatur liegt, bei der das Ionomer und gegebenenfalls das Substratmaterial thermisch geschädigt werden. Durch die thermische Zersetzung der Komplexverbindungen werden in der Schicht feinst verteilte Edelmetallpartikel erzeugt, die keine nachfolgende Reduktion mehr erfordern. Diese Edelmetallpartikel bilden die katalytisch aktiven Komponenten der Gasdiffusionselektrode. Sie werden also erst bei der Trocknung der Elektrodenbeschichtung gebildet. Eine separate, der Elektrodenherstellung vorgeschaltete, aufwendige Herstellung eines Elektrokatalysators wird also durch die Erfindung ebenso vermieden wie eine nachträgliche Einbringung der katalytisch aktiven Edelmetalle und eine abschließende Reduktion.

Eine thermische Schädigung des Ionomers kann in einem Abbau der die Protonen leitenden funktionellen Gruppen, wie zum Beispiel -SO₃H bestehen. Darüber hinaus sind irreversible Veränderungen der Struktur des Polymers möglich, die sich nachteilig auf die mechanischen Eigenschaften oder die Protonenleitfähigkeit des Polymers auswirken. Für Tetrafluorethylen-Fluorvinyether-Copolymer mit Säurefunktionen, z.B. Nafion® von Du Pont de Nemours, liegen die geeigneten Trocknungstemperaturen zwischen 60 und 200°C, bevorzugt zwischen 70 und 160°C.

Die Schichtdicken der Elektrodenschichten sollten zur Erzielung optimaler elektrokatalytischer Aktivitäten zwischen 1 und 100, bevorzugt zwischen 5 und 100 µm liegen. Unterhalb einer Dicke von 1 µm wird die Schicht aufgrund ihrer porösen Struktur unregelmäßig. Daraus resultiert eine verminderte elektrische Leitfähigkeit. Oberhalb von 100 µm nimmt die elektrochemische Nutzbarkeit der in der Schicht enthaltenen Katalysatorpartikel deutlich ab. Für die häufigsten Anwendungsfälle haben sich Schichtdicken zwischen 5 und 50 µm besonders bewährt.

Abhängig von der Schichtdicke der Elektrode sind Flächenkonzentrationen an Metall in den Katalysatorschichten zwischen 0,01 und 5 mg Metall/cm² möglich. Hierzu sind je nach Schichtdicke Gewichtsverhältnisse der Edelmetalle zu den Kohlenstoffpartikeln von 1:10 bis 4:1 notwendig.

Wie die Figuren 1 bis 3 zeigen, können die erfindungsgemäßen Katalysatorschichten verwendet werden, um verschiedene Komponenten von Brennstoffzellensystemen herzustellen, die separat vermarktet werden können. Figur 2 zeigt zum Beispiel eine Gasdiffusionselektrode, die erhalten wird, wenn als Substratmaterial für die Katalysatorschicht eine Gasverteilerstruktur verwendet wird. Hierbei kann es sich zum Beispiel um Kohlefaserpapier oder Kohlevlies handeln.

Figur 3 ist die Darstellung einer Membran-Katalysator-Einheit. Sie wird erhalten, indem die beiden Seiten der Polymer-Elektrolyt-Membran mit jeweils einer Katalysatorschicht beschichtet werden, von denen zumindest eine Schicht eine erfindungsgemäße Katalysatorschicht ist. Die beiden Schichten können dabei unterschiedliche, katalytisch aktive Edelmetalle enthalten. Durch beidseitiges Aufbringen von Gasverteilerstrukturen kann daraus eine Polymer-Elektrolyt-Membran angefertigt werden.

Es besteht jedoch auch die Möglichkeit, statt der Einzelkomponenten komplette Membran-Elektroden-Einheiten gemäß Figur 1 anzufertigen. Zu diesem Zweck können die Katalysatorschichten direkt auf die Polymer-Elektrolyt-Membran aufgebracht und anschließend mit den Gasverteilerstrukturen versehen werden. Alternativ hierzu können die oben beschriebenen Gasdiffusionselektroden separat hergestellt und anschließend auf die beiden Flächen der Polymer-Elektrolyt-Membran aufgebracht werden.

Die folgenden Beispiele 1 - 2 beschreiben die Herstellung von erfindungsgemäßen Katalysatorschichten und daraus angefertigter Membran-Elektroden-Einheiten für Brennstoffzellen, während das Vergleichsbeispiel VB1 die Herstellung einer Membran-Elektroden-Einheit nach US 5,234,777, Protocol II, zeigt. Alle Membran-Elektroden-Einheiten wurden in einer PEM-Brennstoffzelle mit einer Fläche der Elektrode von 25 cm² im drucklosen Wasserstoff/Luft-Betrieb (1bar/1bar) getestet. Als Material zur Gasverteilung diente hydrophobiertes Kohlefaserpapier des Typs TGP-H-090 der Fa. ETEK Inc., Natick(USA).

Protonen leitende Polymere können in einer azidischen, Protonen leitenden H⁺-Form oder nach Austausch der Protonen gegen einwertige Ionen, wie zum Beispiel Na⁺ und K⁺, in einer nichtazidischen Na⁺- oder K⁺-Form vorliegen. Die nichtazidische Form der Polymere ist gewöhnlich gegenüber Temperaturbelastungen beständiger als ihre azidische Form.

In den folgenden Beispielen wurden daher die Protonen leitenden Membranen und das Ionomer der Katalysatorschichten in ihrer Na⁺-Form verwendet. Im letzten Verfahrensschritt der Herstellung wurden die Ionomere durch sogenannte Rück-Protonierung wieder in die azidische, Protonen leitende Form überführt. Die Rück-Protonierung erfolgte durch Behandeln der Membran-Elektroden-Einheiten in Schwefelsäure.

### Vergleichsbeispiel 1 (VB1):

In Anlehnung an Protocol II der US-PS 5,234,777 wurde eine MEE wie folgt hergestellt: Es wurde eine Dispersion von 1 g Trägerkatalysator (Degussa, 20%Pt auf Vulcan XC72), 10 g einer 5%-igen Nafion-Lösung in niedrigsiedenden Alkoholen (Fa. Aldrich, Karlsruhe), 3,3 g Glycerin, 8,2 g Wasser und 0,47 g 1 N NaOH-Lösung hergestellt. Die Mischung wurde im Ultraschallbad dispergiert. Eine Nafion® 115 - Membran in Na⁺-Form wurde auf einer beheizten Platte befestigt. Die Mischung wurde auf eine Seite der Membran aufgebracht und bei 150°C getrocknet. Diese Prozedur wurde so lange wiederholt, bis die gewünschte Platinbeladung von 0,25 mg Pt/cm² erreicht war. Anschließend wurde auch die Rückseite der Membran in gleicher Weise beschichtet. Vor dem Einsatz in der PEM-Brennstoffzelle wurde die mit Katalysator beschichtete Membran in 0,5 M Schwefelsäure-Lösung reprotoniert. Die Gesamt-Platinbeladung (Summe aus beiden Katalysatorschichten) der Membran-Elektroden-Einheit betrug 0,5 mg/cm².

### Beispiel 1:

Zur Herstellung einer Membran-Elektroden-Einheit wurden die folgenden Tinten hergestellt:

Die Herstellung des Umsetzungsproduktes Pt-VTS erfolgte in Anlehnung an die US-Patentschriften US 3,775,452 und US 3,715,334. 20 Gewichtsteile Natriumbicarbonat wurden zu einer Mischung aus 10 Gewichtsteilen H₂PtCl₆^{·}8H₂O und 20 Gewichtsteilen 1,3-Divinyl-1,1,3,3-tetramethyldisiloxan und 50 Gewichtsteilen Ethanol gegeben. Die Mischung wurde 30 Minuten lang unter Rühren am Rückfluß gekocht, 15 Stunden lang stehen gelassen und danach filtriert. Die leichtflüchtigen Bestandteile der Mischung wurden unter Vakuum abdestilliert. Der Rückstand wurde in Benzol gelöst, nochmals filtriert und das Benzol anschließend im Vakuum abdestilliert. Der Platin-Gehalt des flüssigen Rückstands betrug 18,1 Gew.-%.

Zur Herstellung einer erfindungsgemäßen Tinte wurden die folgenden Bestandteile eingesetzt (siehe Tabelle 1):

**Tabelle 1**

| Zusammensetzung der Tinte | |
|---|---|
| Nafion-Lösung (3,3 Gew.-% in Propylenglykol) | 151,5 g |
| Ruß Vulcan XC72 | 20,4 g |
| Pt-VTS-Lösung (33,7% in Dodecansäuremethylester) | 33,8 9 |
| Natronlauge (15%ig) | 2,4 g |

Die Bestandteile wurden innig miteinander vermischt und sorgfältig homogenisiert.

### Beispiel 2:

Zur Herstellung einer weiteren Membran-Elektroden-Einheit wurde das in Beispiel 1 hergestellt Pt-VTS zu einer Tinte mit folgender Zusammensetzung verarbeitet:

**Tabelle 2:**

| Zusammensetzung der Tinte | |
|---|---|
| Nafion-Lösung (3,75% in Propylenglykol) | 181,1 g |
| Ruß Vulcan XC72 | 16,0 g |
| Pt-VTS(Pt-Gehalt 18,1%) | 22,1 g |
| Natronlauge (15%ig) | 4,1 g |

Die beiden Tinten wurden im Siebdruckverfahren auf Nafion® 115 - Membranen in der Na⁺-Form aufgedruckt und bei 110°C getrocknet. Anschließend wurden die Rückseiten der Membranen auf die gleiche Weise mit der Katalysatortinte beschichtet. Die Rück-Protonierung erfolgte in 0,5 molarer Schwefelsäure. Die Membran-Elektroden-Einheit, welche unter Verwendung der Tinte von Beispiel 1 angefertigt wurde, wies eine Gesamt-Platinbeladung von nur 0,26 mg/cm² auf, während die zweite Membran-Elektroden-Einheit eine Gesamt-Platinbeladung von 0,48 mg/cm² besaß.

In den fertigen, erfindungsgemäßen Membran-Elektroden-Einheiten konnten kein Silizium und auch keine siliciumorganischen Verbindungen mehr gefunden werden.

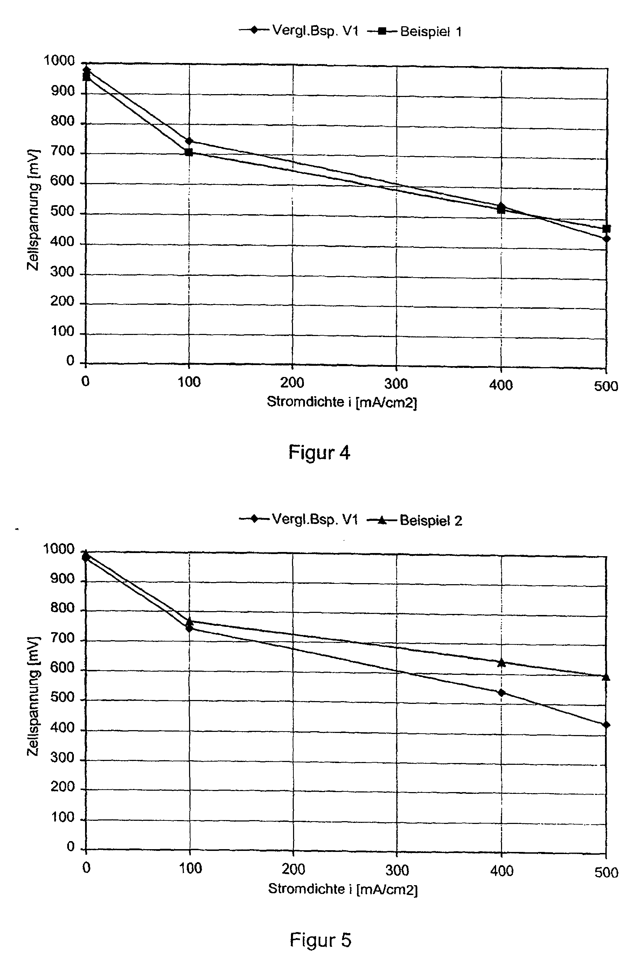

Die gemessenen Zellspannungen im Luftbetrieb in Abhängigkeit von der Stromdichte sind beispielhaft in Figur 4 für die Zellen von Vergleichsbeispiel 1 und Beispiel 1 und in Figur 5 für die Zellen von Vergleichsbeispiel 1 und von Beispiel 2 dargestellt. Man erkennt, daß die erfindungsgemäße Membran-Elektroden-Einheiten nach Beispiel 1 eine in etwa gleich hohe Leistung liefert wie VB1 trotz deutlich verringerter Platinbeladung (nur etwa 50%). Beispiel 2 zeigt bei gleicher Platinbeladung eine drastisch verbesserte elektrische Leistung im Vergleich zum Stand der Technik (VB1).

Beide Beispiele belegen eine deutliche Erhöhung der Platinausnutzung. Dies ist offenbar auf die besonderen Eigenschaften der Platinkristallitbildung in der erfindungsgemäßen Katalysatorschicht zurückzuführen. Bei der thermischen Zersetzung der organischen Pt(0)-Verbindung wird metallisches Platin sofort gebildet, ohne den Umweg über eine Fällung und anschließende Reduktion durch chemische Agenzien.

Weiterhin wird vermutet, daß die Poren der Katalysatorschicht aufgrund der hohen Konzentration an polaren Oberflächengruppen durch die unpolaren organischen Pt(0)-Verbindungen nicht benetzt werden. Dies führt zu einer besseren Zugänglichkeit der Katalysatorpartikel für Ionomer und Reaktivgase und damit zu einer Erhöhung der Zahl der Dreiphasenzonen.

Die gemäß dem Stand der Technik notwendige Herstellung des Trägerkatalysators in einem separaten Schritt entfällt bei den erfindungsgemäßen Membran-Elektroden-Einheiten.

Tabelle 3 zeigt die bei einer Belastung der Zellen mit einer Stromdichte von 500 mA/cm² gemessenen Zellspannungen. Ebenfalls angegeben sind die Gesamtbeladungen der jeweiligen Membran-Elektroden-Einheiten mit Platin. Bei diesen Gesamtbeladungen handelt es sich um die Summe aus den Platinbeladungen der beiden Katalysatorschichten.

**Tabelle 3:**

| Zellspannungen im Luftbetrieb bei 500 mA/cm² | | |
|---|---|---|
| Beispiel | Platinbeladung [mg/cm²] | Zellspannung [mV] |
| Vergleichsbeispiel 1 | 0,5 | 436 |
| Beispiel 1 | 0,26 | 470 |
| Beispiel 2 | 0,48 | 598 |

## Patentansprüche

1. Katalysatorschicht auf einem Substratmaterial, welche ein Protonen leitendes Polymer (Ionomer), elektrisch leitfähige Kohlenstoffpartikel und feinteilige Partikel mindestens eines Edelmetalles enthält,
erhältlich durch
Beschichten des Substratmaterials mit einer Tinte, welche eine Dispersion aus den Kohlenstoffpartikeln und mindestens einer organischen Edelmetall-Komplexverbindung in einer Lösung des Ionomers enthält und Trocknen der Beschichtung unterhalb einer Temperatur bei der das Ionomer oder das Substratmaterial thermisch geschädigt werden, wobei die Edelmetalle der Komplexverbindungen in der Oxidationsstufe 0 vorliegen und die Komplexverbindungen während der Trocknung unter Bildung der feinteiligen Edelmetallpartikel thermisch zersetzt werden.

2. Katalysatorschicht nach Anspruch 1, wobei
anstelle der organischen Edelmetall-Komplexverbindungen eine Lösung der organischen Edelmetall-Komplexverbindungen in einem organischen Lösungsmittel verwendet wird.

3. Katalysatorschichtnach Anspruch 2, wobei
es sich bei dem Ionomer um ein Tetrafluorethylen-Fluorvinylether-Copolymer mit Sulfonsäuregruppen handelt.

4. Katalysatorschicht nach Anspruch 3, wobei
mindestens eines der Edelmetalle aus der Gruppe Platin, Palladium, Iridium, Rhodium und Ruthenium in Form einer organischen Edelmetall-Komplexverbindung verwendet wird.

5. Katalysatorschicht nach Anspruch 4, wobei
als organische Edelmetall-Komplexverbindung eine Pt(0)-Komplexverbindung verwendet wird, die sich unterhalb von 200°C thermisch zersetzt.

6. Katalysatorschicht nach Anspruch 5, wobei
es sich bei der Pt(0)-Komplexverbindung um das Umsetzungsprodukt von 1,3-Divinyl-1,1,3,3-tetramethyldisiloxan mit Hexachloroplatinsäure handelt.

7. Katalysatorschicht nach Anspruch 1, wobei
als elektrisch leitfähige Kohlenstoffpartikel feinteiliger Ruß, Graphit oder Aktivkohle eingesetzt wird.

8. Katalysatorschicht nach Anspruch 7, wobei
das Gewichtsverhältnis der Kohlenstoffpartikel zum Ionomer in der fertigen Elektrode zwischen 5:1 und 1:1 liegt.

9. Katalysatorschicht nach Anspruch 8, wobei
sie eine Flächenkonzentration an den Edelmetallen zwischen 0,01 und 5 mg/cm² aufweist.

10. Katalysatorschicht nach Anspruch 9, wobei das Gewichtsverhältnis der Edelmetalle zu den Kohlenstoffpartikeln 1:10 bis 4:1 beträgt.

11. Katalysatorschicht nach Anspruch 10, wobei
die schicht eine Schichtdicke zwischen 1 und 100 µm aufweist.

12. Tinte für die Herstellung der Katalysatorschicht nach einem der vorstehenden Ansprüche, welche ein Protonen leitendes Polymer (Ionomer), elektrisch leitfähige Kohlenstoffpartikel und feinteilige Partikel mindestens eines Edelmetalles enthält, wobei
die Tinte eine Dispersion aus den Kohlenstoffpartikeln und mindestens einer organischen Edelmetall-Komplexverbindung in einer Lösung des Ionomers enthält, wobei die Edelmetalle der Komplexverbindungen in der Oxidationsstufe 0 vorliegen und die Komplexverbindungen unterhalb einer Temperatur, bei der eine thermisch bedingte Schädigung des Ionomers einsetzt, thermisch unter Bildung der feinteiligen Edelmetallpartikel zersetzt werden können.

13. Tinte nach Anspruch 12, wobei
anstelle der organischen Edelmetall-Komplexverbindungen eine Lösung der organischen Edelmetall-Komplexverbindungen in einem organischen Lösungsmittel verwendet wird.

14. Tinte nach Anspruch 13, wobei
es sich bei dem Ionomer um ein Tetrafluorethylen-Fluorvinylether-Copolymer mit Sulfonsäuregruppen handelt.

15. Tinte nach Anspruch 14, wobei
mindestens eines der Edelmetalle aus der Gruppe Platin, Palladium, Iridium, Rhodium und Ruthenium in Form einer organischen Edelmetall-Komplexverbindung verwendet wird.

16. Tinte nach Anspruch 15, wobei
als organische Edelmetall-Komplexverbindung eine Pt(0)-Komplexverbindung verwendet wird, die sich unterhalb von 200°C thermisch zersetzt.

17. Tinte nach Anspruch 16, wobei
es sich bei der Pt(0)-Komplexverbindung um das Umsetzungsprodukt von 1,3-Divinyl-1,1,3,3-tetramethyldisiloxan mit Hexachloroplatinsäure handelt.

18. Tinte nach Anspruch 12, wobei
als elektrisch leitfähige Kohlenstoffpartikel feinteiliger Ruß, Graphit oder Aktivkohle eingesetzt wird.

19. Tinte nach Anspruch 18, wobei
das Gewichtsverhältnis der Kohlenstoffpartikel zum Ionomer zwischen 5:1 und 1:1 liegt.

20. Tinte nach Anspruch 19, wobei das
Gewichtsverhältnis der Edelmetalle zu den Kohlenstoffpartikeln 1:10 bis 4:1 beträgt.

21. Verfahren zur Herstellung einer Katalysatorschicht auf einem Substratmaterial, welche ein Protonen leitendes Polymer (Ionomer), elektrisch leitfähige Kohlenstoffpartikel und feinteilige Partikel mindestens eines Edelmetalles enthält, umfassend die Schritte :
Beschichten des Substratmaterials mit einer Tinte, welche eine Dispersion aus den Kohlenstoffpartikeln und mindestens einer organischen Edelmetall-Komplexverbindung in einer Lösung des Ionomers enthält und Trocknen der Beschichtung unterhalb einer Temperatur bei der das Ionomer oder das Substratmaterial thermisch geschädigt werden, wobei die Edelmetalle der Komplexverbindungen in der Oxidationsstufe 0 vorliegen und die Komplexverbindungen während der Trocknung thermisch unter Bildung der feinteiligen Edelmetallpartikel zersetzt werden.

22. Verfahren nach Anspruch 21, wobei
anstelle der organischen Edelmetall-Komplexverbindungen eine Lösung der organischen Edelmetall-Komplexverbindungen in einem organischen Lösungsmittel verwendet wird.

23. Gasdiffusionselektrode für eine Polymer-Elektrolyt-Brennstoffzelle, wobei
als Substratmaterial für eine Katalysatorschicht nach einem der Ansprüche 1 bis 11 eine Gasverteilerstruktur verwendet wird.

24. Membran-Katalysator-Einheit aus einer Polymer-Elektrolyt-Membran und beidseitig aufgebrachten Katalysatorschichten, wobei
zur Herstellung der Katalysatorschichten eine Tinte nach einem der Ansprüche 12 bis 20 verwendet wurde.

25. Membran-Elektroden-Einheit aus einer Polymer-Elektrolyt-Membran und beidseitig aufgebrachten Katalysatorschichten mit Gasverteilerstrukturen, wobei
zur Herstellung der Katalysatorschichten eine Tinte nach einem der Ansprüche 12 bis 20 verwendet wurde.

## Claims

1. Catalyst layer on a substrate material which contains a proton-conducting polymer (ionomer), electrically conductive carbon particles and fine particles of at least one precious metal,
obtainable by
coating the substrate material with an ink which contains a dispersion of the carbon particles and at least one organic precious metal complex compound in a solution of the ionomer, and drying the coating below a temperature at which the ionomer or the substrate material is thermally damaged, the precious metals in the complex compounds being present with an oxidation number of 0 and the complex compounds being thermally decomposed during drying to form the fine precious metal particles.

2. Catalyst layer according to claim 1, wherein instead of the organic precious metal complex compounds, a solution of the organic precious metal complex compounds in an organic solvent is used.

3. Catalyst layer according to claim 2, wherein the ionomer is a tetrafluoroethylene-fluorovinyl ether copolymer with sulfonic acid groups.

4. Catalyst layer according to claim 3, wherein at least one of the precious metals from the group platinum, palladium, iridium, rhodium and ruthenium is used in the form of an organic precious metal complex compound.

5. Catalyst layer according to claim 4, wherein a Pt(0) complex compound which thermally decomposes at below 200°C is used as the organic precious metal complex compound.

6. Catalyst layer according to claim 5, wherein the Pt(0) complex compound is the reaction product of 1,3-divinyl-1,1,3,3-tetramethyldisiloxane with hexachloroplatinic acid.

7. Catalyst layer according to claim 1, wherein fine particle size carbon black, graphite or activated carbon is used as the electrically conductive carbon particles.

8. Catalyst layer according to claim 7, wherein the weight ratio of the carbon particles to the ionomer in the finished electrode is between 5:1 and 1:1.

9. Catalyst layer according to claim 8, wherein it has an area concentration of the precious metals of between 0.01 and 5 mg/cm².

10. Catalyst layer according to claim 9, wherein the weight ratio of the precious metals to the carbon particles is 1:10 to 4:1.

11. Catalyst layer according to claim 10, wherein the layer has a layer thickness of between 1 and 100 µm.

12. Ink for the production of the catalyst layer according to one of the above claims, which contains a proton-conducting polymer (ionomer), electrically conductive carbon particles and fine particles of at least one precious metal, wherein the ink contains a dispersion of the carbon particles and at least one organic precious metal complex compound in a solution of the ionomer, the precious metals in the complex compounds being present with an oxidation number of 0 and the complex compounds being thermally decomposable below a temperature at which thermal damage to the ionomer sets in, to form the fine precious metal particles.

13. Ink according to claim 12, wherein instead of the organic precious metal complex compounds, a solution of the organic precious metal complex compounds in an organic solvent is used.

14. Ink according to claim 13, wherein the ionomer is a tetrafluoroethylene-fluorovinyl ether copolymer with sulfonic acid groups.

15. Ink according to claim 14, wherein at least one of the precious metals from the group platinum, palladium, iridium, rhodium and ruthenium is used in the form of an organic precious metal complex compound.

16. Ink according to claim 15, wherein a Pt(0) complex compound which thermally decomposes at below 200°C is used as the organic precious metal complex compound.

17. Ink according to claim 16, wherein the Pt(0) complex compound is the reaction product of 1,3-divinyl-1,1,3,3-tetramethyldisiloxane with hexachloroplatinic acid.

18. Ink according to claim 12, wherein fine particle size carbon black, graphite or activated carbon is used as the electrically conductive carbon particles.

19. Ink according to claim 18, wherein the weight ratio of the carbon particles to the ionomer is between 5:1 and 1:1.

20. Ink according to claim 19, wherein the weight ratio of the precious metals to the carbon particles is 1:10 to 4:1.

21. Process for the production of a catalyst layer on a substrate material, which contains a proton-conducting polymer (ionomer), electrically conductive carbon particles and fine particles of at least one precious metal, comprising the following steps:
coating the substrate material with an ink which contains a dispersion of the carbon particles and at least one organic precious metal complex compound in a solution of the ionomer, and drying the coating below a temperature at which the ionomer or the substrate material is thermally damaged, the precious metals in the complex compounds being present with an oxidation number of 0 and the complex compounds being thermally decomposed during drying to form the fine precious metal particles.

22. Process according to claim 21, wherein instead of the organic precious metal complex compounds, a solution of the organic precious metal complex compounds in an organic solvent is used.

23. Gas diffusion electrode for a polymer electrolyte fuel cell, wherein a gas diffusion structure is used as substrate material for a catalyst layer according to one of claims 1 to 11.

24. Membrane catalyst assembly of a polymer electrolyte membrane and catalyst layers applied on both sides, wherein to produce the catalyst layers, an ink according to one of claims 12 to 20 was used.

25. Membrane electrode assembly of a polymer electrolyte membrane and catalyst layers with gas diffusion structures applied on both sides, wherein to produce the catalyst layers, an ink according to one of claims 12 to 20 was used.

## Revendications

1. Couche de catalyseur sur une matière de support contenant un polymère conducteur de protons (ionomère), des particules de carbone conductrices électriques et des particules finement divisées d'au moins un mêtal noble, obtenue par
revêtement de la matière de support avec une encre contenant une dispersion de particules de carbone et d'au moins un composé complexe organique d'un métal noble dans une solution de l'ionomère et séchage du revêtement en dessous d'une température à laquelle l'ionomère ou la matière du support risquent d'être endommagés thermiquement,
les métaux nobles des composés complexes étant présents avec un niveau d'oxydation 0 et les composés complexes étant décomposées thermiquement pendant le séchage en formant des particules de métal noble finement divisées.

2. Couche de catalyseur selon la revendication 1,
dans laquelle
à la place des composés complexes organiques de métal noble, on utilise une solution des composés complexes organiques de métal noble dans un solvant organique.

3. Couche de catalyseur selon la revendication 2,
dans laquelle
l'ionomère est un copolymère de tétrafluoréthylène-fluorovinyléther avec des groupes d'acide sulfonique.

4. Couche de catalyseur selon la revendication 3,
dans laquelle
au moins l'un des métaux nobles est choisi dans le groupe formé par platine, palladium, iridium, rhodium et ruthénium, sous la forme d'un composé complexe organique de métal noble.

5. Couche de catalyseur selon la revendication 4,
dans laquelle
comme composé complexe organique de métaux nobles, on utilise une combinaison complexe Pt(0) qui se décompose thermiquement en dessous de 200°C.

6. Couche de catalyseur selon la revendication 5,
dans laquelle
le composé complexe Pt(0) est le produit de réaction du 1,3-divinyle-1,1,3,3-tétraméthyldisiloxane avec de l'acide hexachlorique de platine.

7. Couche de catalyseur selon la revendication 1,
dans laquelle
les particules de carbone conductrices électriques sont du noir de fumée, du graphite ou du charbon actif finement divisés.

8. Couche de catalyseur selon la revendication 7,
dans laquelle
le rapport pondéral des particules de carbone et de l'ionomère dans l'électrode terminée est compris entre 5:1 et 1:1.

9. Couche de catalyseur selon la revendication 8,
dans laquelle
on a une concentration de surface des métaux nobles entre 0,01 et 5 mg/cm².

10. Couche de catalyseur selon la revendication 9,
dans laquelle
le rapport pondéral du métal noble et des particules de carbone est compris entre 1:10 et 4:1.

11. Couche de catalyseur selon la revendication 10,
dans laquelle
la couche a une épaisseur comprise entre 1 et 100 µm.

12. Encre pour la fabrication de la couche de catalyseur selon l'une des revendications précédentes contenant un polymère conducteur de protons (ionomère), des particules de carbone conductrices électriques et des particules finement divisées d'au moins un métal noble,
l'encre contenant une dispersion de particules de carbone et d'au moins un composé complexe organique de métal noble dans une solution de l'ionomère,
les métaux nobles des composés complexes étant présents au niveau d'oxydation 0 et les composés complexes se décomposant thermiquement en formant les particules de métal noble finement divisées en dessous d'une température correspondant à un endommagement thermique de l'ionomère.

13. Encre selon la revendication 12,
dans laquelle
à la place des composés complexes organiques de métaux nobles on utilise une solution de composés complexes organiques de métaux nobles dans un solvant organique.

14. Encre selon la revendication 13,
dans laquelle
l'ionomère est un copolymère de tétrafluoréthylène-fluorovinyléther avec des groupés d'acide sulfonique.

15. Encre selon la revendication 14,
dans laquelle
au moins l'un des métaux nobles est choisi dans le groupe formé par platine, palladium, iridium, rhodium et ruthénium, sous la forme de composés complexes organiques de métaux nobles.

16. Encre selon la revendication 15,
dans laquelle
le composé complexe organique de métal noble utilise un composé complexe Pt(0) qui se décompose thermiquement en dessous de 200°C.

17. Encre selon la revendication 16,
dans laquelle,
le composé complexe Pt(0) est le produit de réaction du 1,3-divinyle-1,1,3,3-tétraméthyldisiloxane avec de l'acide d'hexachlorure de platine.

18. Encre selon la revendication 12,
dans laquelle
les particules de carbone conductrices électriques sont du noir de fumée, du graphite ou du charbon actif finement divisés.

19. Encre selon la revendication 18,
dans laquelle
le rapport pondéral des particules de carbone à l'ionomère est compris entre 5:1 et 1:1.

20. Encre selon la revendication 19,
dans laquelle
le rapport pondéral des métaux nobles et des particules de carbone est compris entre 1:10 et 4:1.

21. Procédé de fabrication d'une couche de catalyseur sur une matière de support contenant un polymère conducteur de protons (ionomère), des particules de carbone conductrices électriques et des particules finement divisées d'au moins un métal noble comprenant les étapes suivantes :
revêtement de la matière de support avec une encre contenant une dispersion de particules de carbone et d'au moins un composé complexe organique de métaux nobles dans une solution de l'ionomère et séchage du revêtement en dessous d'une température à laquelle l'ionomère ou la matière de support est endommagée thermiquement, les métaux nobles des composés complexes étant présents avec un niveau d'oxydation 0 et les composés complexes subissant une décomposition thermique pendant le séchage en formant des particules de métal noble finement divisées.

22. Procédé selon la revendication 21,
dans laquelle
à la place des composés complexes organiques de métaux nobles, on utilise une solution de composés complexes organiques de métaux nobles dans un solvant organique.

23. Electrode de diffusion gazeuse pour une pile à combustible polymère-électrolyte
dans laquelle
comme matière de support pour une couche de catalyseur selon l'une des revendications 1 à 11 on utilise une structure de distribution de gaz.

24. Ensemble membrane-catalyseur formé d'une membrane polymère-électrolyte et de part et d'autre de celle-ci, d'une couche de catalyseur,
dans laquelle
pour réaliser les couches de catalyseur on utilise une encre selon l'une des revendications 12 à 20.

25. Ensemble membrane-électrode formé d'une membrane polymère-électrolyte avec sur ses deux faces des couches de catalyseur avec une structure de distribution de gaz
dans laquelle
pour la réalisation des couches de catalyseur on utilise une encre selon l'une des revendications 12 à 20.
